# EUROPEAN PATENT SPECIFICATION

(11) **EP 3 541 670 B1**
(45) Date of publication and mention of the grant of the patent: **20.01.2021**
(21) Application number: 17817425.6
(22) Date of filing: 21.11.2017
(51) Int. Cl.: B60S 9/08, B60P 3/20, B60H 1/32

(54) **LANDING GEAR SYSTEM AND METHOD OF OPERATING A LANDING GEAR SYSTEM FOR A VEHICLE TRAILER**
FAHRWERKSSYSTEM UND VERFAHREN ZUM BETREIBEN EINES FAHRWERKSSYSTEMS FÜR EINEN FAHRZEUGANHÄNGER
SYSTÈME DE TRAIN D'ATTERRISSAGE ET PROCÉDÉ DE FONCTIONNEMENT D'UN SYSTÈME DE TRAIN D'ATTERRISSAGE POUR UNE REMORQUE DE VÉHICULE

(30) Priority: 21.11.2016 US 201662424842 P
(43) Date of publication of application: 25.09.2019
(73) Proprietor: Carrier Corporation, Palm Beach Gardens, FL 33418 (US)
(72) Inventor: SWAB, Michael, Acworth, GA 30102 (US)
(74) Representative: Dehns
(86) International application number: PCT/US2017/062828
(87) International publication number: WO 2018/094400

(56) References cited:
- WO-A1-2013/148236
- DE-A1-102011 079 124
- US-B1- 8 827 309

## Description

### TECHNICAL FIELD OF THE DISCLOSED EMBODIMENTS

The presently disclosed embodiments generally relate to landing gear systems and, more particularly, to a system and method of operating a landing gear system for a vehicle trailer having a heating, ventilation, air conditioning, and refrigeration (HVAC/R) system

### BACKGROUND OF THE DISCLOSED EMBODIMENTS

Trucks and other vehicles often transport goods that require a refrigerated or otherwise temperature-controlled cargo compartment. Such vehicles often include a transport refrigeration unit (TRU) that operates to maintain a set point temperature of the trailer or cargo compartment. Such TRUs include one or more controllers, compressors, condensers, control valves, expansion valves, evaporator coils, and/or other components typically found in an HVAC/R unit to maintain one or more set point temperatures. The trailer or cargo compartment is often detachable from the tractor in a semi-trailer vehicle. When the trailer must be detached, a landing gear must be extended or otherwise utilized to support the trailer without the tractor. Conventional landing gear systems include a hand-cranked or otherwise manual deployment feature. Such conventional manually-operated systems may cause significant fatigue and/or injury to an operator. Further, the trailer, the TRU, and/or any contents of the trailer may not be secure and able to be monitored while the trailer is detached from the tractor.

Therefore, there exists a need for a landing gear system for a vehicle trailer having an HVAC/R system, a method of operating a landing gear system of a vehicle trailer having an HVAC/R system, and a landing gear security system for a vehicle trailer having an HVAC/R system that improves the operation of the landing gear, increases the security of the trailer and/or TRU, and improves monitoring of the trailer and/or TRU.

DE 10 2011 079124 A1 discloses an adjustable support for a semitrailer of a lorry having electromotors for the displacement of arms, and a monitoring unit monitoring a gradient of supply current or power supply voltage of electromotors for determination of incorrect operating modes.

### SUMMARY OF THE DISCLOSED EMBODIMENTS

From a first aspect, the invention provides a landing gear system for a vehicle trailer having an HVAC/R system. The landing gear system includes a landing gear configured to be raised and lowered to support the vehicle trailer, a motor coupled to the landing gear and configured to raise and lower the landing gear, and a power source operatively connected to the motor and configured for connection with the HVAC/R system.

The motor may be an electric motor. The power source may be an electric battery electrically coupled to the electric motor. The system may further include a controller configured to send power from the power source to the motor. The controller may include a security module configured to limit control of at least one of the controller and the motor. At least two of the motor, the power source, and the controller may be connected by a circuit such that disconnection of the circuit transmits an alert signal. The power source may be configured to receive power from the HVAC/R system when a power level of the power source is below a threshold power level.

From a second aspect, the invention provides a method of operating a landing gear system of a vehicle trailer having an HVAC/R system. The method includes providing a motor operatively coupled to a landing gear and powering the landing gear with a power source configured for connection with the HVAC/R system.

The method may further include controlling power from the power source to the motor with a controller. The method may further include connecting at least two of the motor, the power source, and the controller with a circuit; and signalling an alert upon disconnection of the circuit. The method may further include determining a power level of the power source and transmitting power from the HVAC/R system to the power source when the power level is below a threshold power level. Powering the landing gear with a power source may include electrically powering the landing gear with an electric battery.

Also disclosed herein is a landing gear security system for a vehicle trailer having an HVAC/R system. The landing gear security system includes a power source configured for connection to the HVAC/R system and to supply power to a motor operatively coupled to a landing gear and a controller configured to control transmission of power from the power source to the motor and having a security module configured to limit access to at least one of the controller and the motor.

The controller may be configured to detect disconnection between the motor and the controller. A current may be transmitted between the controller and the motor to detect disconnection between the controller and the motor. The controller may transmit an alert signal upon disconnection. A binary code may be transmitted to the controller to limit access to at least one of the controller and the motor. The landing gear security system may further include a user interface configured to receive input for access to the controller.

### BRIEF DESCRIPTION OF DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a schematic diagram of a landing gear system in accordance with an embodiment of the present disclosure;
FIG. 2 is a schematic diagram of a landing gear system in accordance with an embodiment of the present disclosure;
FIG. 3 illustrates a landing gear system in accordance with an embodiment of the present disclosure; and
FIG. 4 illustrates a method of operating a landing gear system in accordance with an embodiment of the present disclosure.

### DETAILED DESCRIPTION OF THE DISCLOSED EMBODIMENTS

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended.

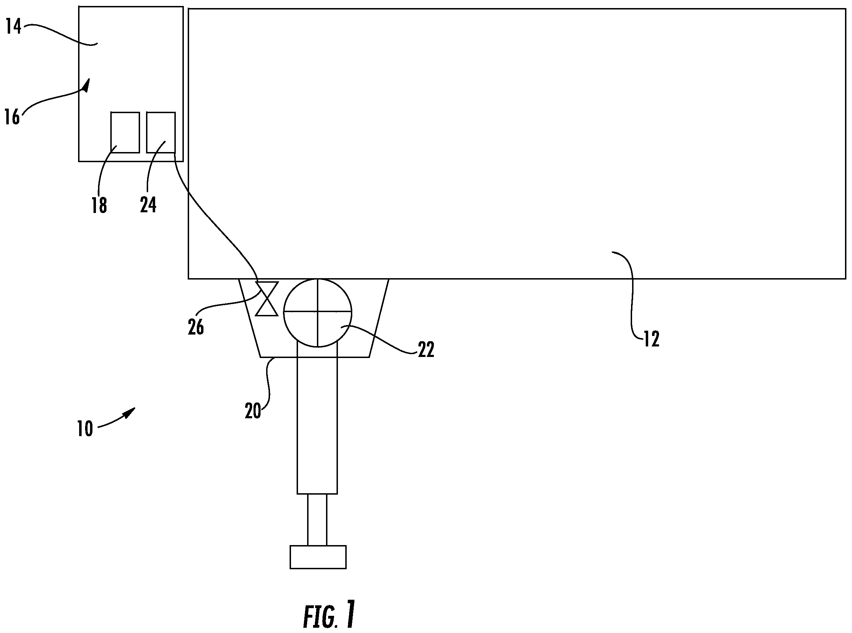

FIG. 1 illustrates a landing gear system 10 for a vehicle trailer 12 or other container having a heating, ventilation, air conditioning, and refrigeration (HVAC/R) system 14 in an embodiment of the present disclosure. In an embodiment, the HVAC/R system 14 is provided for a vehicle cargo compartment of the vehicle trailer 12. The vehicle trailer 12 in an embodiment includes a transport refrigeration unit (TRU) 16 that includes a TRU engine 18.

The landing gear system 10 includes a landing gear 20 disposed below the trailer 12 and configured to raised and lowered to support the vehicle trailer 12. The landing gear system 10 further includes a motor 22 coupled to the landing gear 20 to raise and lower the landing gear 20. The landing gear system 10 further includes a power source 24. The power source 24 is connected to the HVAC/R system 14 and/or the TRU 16, such as by electrical connection in one non-limiting example, such that the power source 24 may supply power to or receive power from the HVAC/R system 14 and/or the TRU 16 in an embodiment. The motor 22 is an electrical motor in the embodiment of FIG. 1. The motor 22 is a hydraulic, pneumatic, or other fluid motor in an embodiment and an internal combustion engine or other type of engine or source of motive energy in another embodiment. The power source 24 is an electric battery in an embodiment. The power source 24 includes direct current in an embodiment and alternating current in another embodiment. The power source 24 is integral with the motor 22 in an embodiment and spaced from the motor 22 in another embodiment. In the embodiment illustrated in FIG. 1, the power source 24 is an electric battery electrically connected to the motor 22.

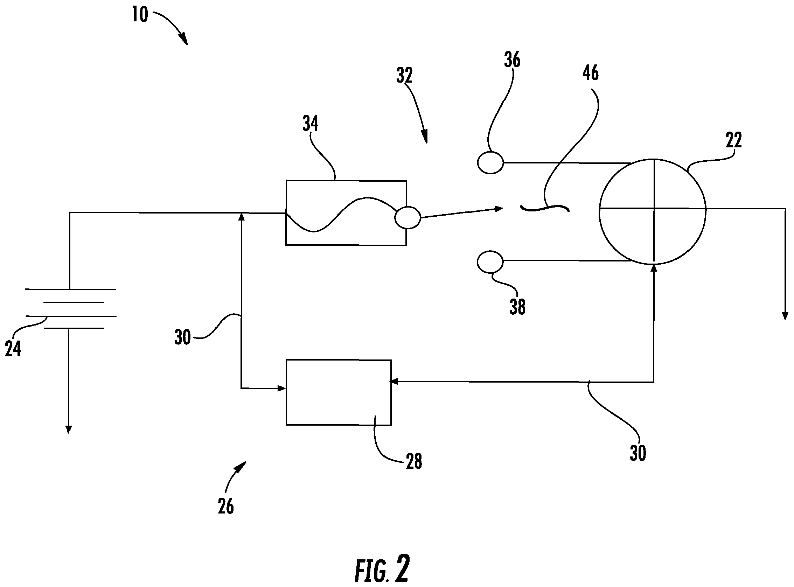

Referring now to FIG. 2, the landing gear system 10 of the embodiment of FIG. 1 further includes a controller 26 configured to selectively send power from the power source 24 to the motor 22. The controller 26 of an embodiment includes a manually, remotely, and/or automatically operated switch 32 and a fuse 34 to control the direction and amount of power being sent to the motor 22. The switch 32 of the embodiment of FIG. 2 is a three-way switch capable of being positioned in an "UP" position 36 to send power to the motor 22 for operation of the landing gear 20 in an upward direction, a "DOWN" position 38 to send power to the motor 22 for operation of the landing gear 20 in a downward direction, and an "OFF" position 46 to prevent power from being sent to the motor 22.

In an embodiment, when the power level of the power source 24 is below the threshold level such that it has insufficient power, the power source 24 receives power from the HVAC/R system 14 and/or the TRU 16 to charge the power source 24. In an embodiment, when the power level of the power source 24 is below the threshold level such that it has insufficient power, the HVAC/R system 14 and/or the TRU 16 provides power directly to the landing gear system 10 for operation.

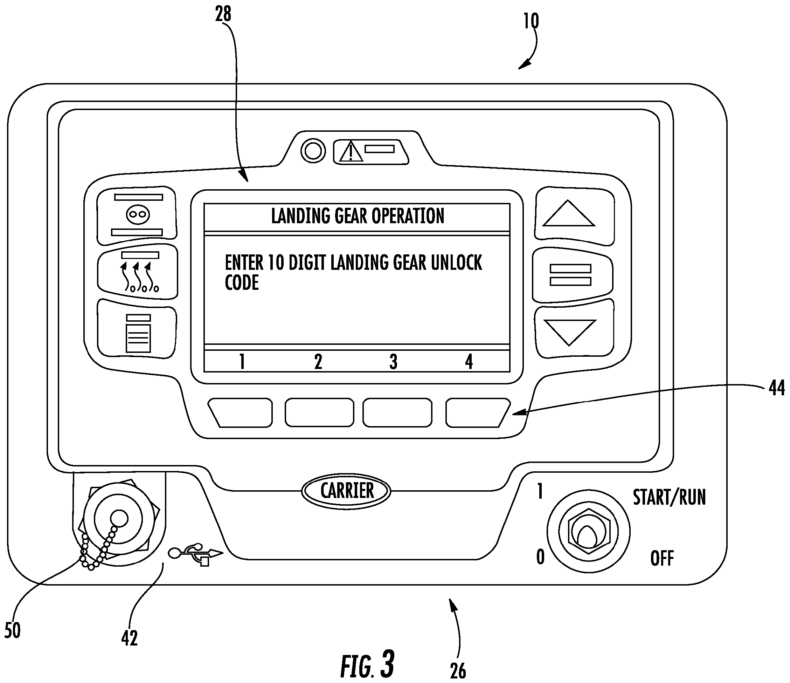

Referring now to FIG. 3 with continuing reference to FIG. 2, the controller 26 of the landing gear system 10 includes a user interface 42 configured to receive input for access to the controller 26. The controller 26 includes a security module 28 configured to limit control of the controller 26 and/or the motor 22 in an embodiment. The interface 42 includes an electronic keypad 44 to allow a user to enter an access code in one embodiment. In additional embodiments, the interface 42 includes a key lock 50 and/or one or more security devices known by those having ordinary skill in the art. In an embodiment, the operation of the landing gear 20 is controlled by the user with the interface 42 rather than with the switch 32. In such an embodiment, the controller 26 receives user input at the interface 42 for a desired position or movement of the landing gear 20 and transmits a control signal or otherwise controls operation of the motor 22 of the landing gear 20 at least partially based on the user input.

In one embodiment, a circuit 30 connects two or more of the motor 22, the power source 24, and/or the controller 26. A current is transmitted between the controller 26 and the motor 22 to detect disconnection between the controller 26 and the motor 22 in an embodiment. In an embodiment, a binary or other digital code is transmitted along the circuit 30 to limit access to the controller 26 and/or the motor 22. The security module 28 of an embodiment is configured to detect or determine disconnection of the circuit 30 indicating an attempt to bypass the security module 28 to access or control the motor 22. Upon detection or determination of disconnection of the circuit 30, the controller 26 and/or the security module 28 initiate, transmit, or otherwise create an alert signal. The alert signal includes a locally-detectable audible or visible alarm or alert in embodiments, such as a siren, horn, strobe or other light source in particular non-limiting examples. In additional embodiments, the alert signal is transmitted remotely, such as through a telematics system of the TRU 16 in a non-limiting example, to notify an owner, authorities, or other parties of the activities relating to the landing gear system 10. In a further embodiment, the controller 26 and/or the TRU 16 initiates and/or transmits other signals, and may store locally or remotely such signals, to allow the owner or others to log and/or track the location, operation, status, and/or condition of the landing gear system 10, the TRU 16, and/or the vehicle trailer 12.

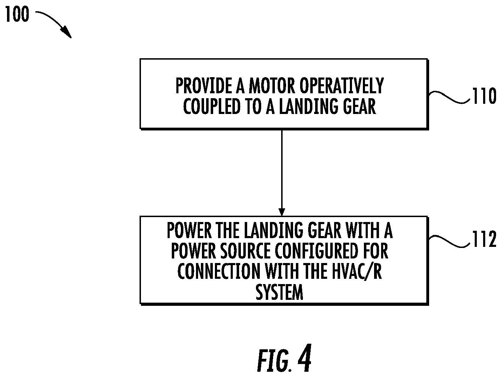

Referring now to FIG. 4, a method 100 of operating the landing gear system 10 of the vehicle trailer 12 having the HVAC/R system 14 is provided. The method 100 includes providing, at step 110, the motor 22 operatively coupled to the landing gear 20, and powering, at step 112, the landing gear 20 with the power source 24. As described above, the power source 24 is connected with the HVAC/R system 14 in an embodiment. In an embodiment, the HVAC/R system 14 and the landing gear system 10 share the power source 24. In an additional embodiment, the method 100 includes controlling power from the power source 24 to the motor 22 with the controller 26. The method 100 of an embodiment further includes connecting two or more of the motor 22, the power source 24, and the controller 26 with the circuit 30 and transmitting, signaling, or otherwise initiating an alert upon detection or determination of a disconnection of the circuit 30. In an additional embodiment, the method 100 includes the controller 26 or another portion of the landing gear system 10 determining the power level of the power source 24 and transmitting power from the HVAC/R system 14 to the power source 24 when the power level is below a threshold power level. The threshold power level may be a voltage range, such as a voltage between about 6 and 14 volts in one embodiment, and between 9 and 12 volts in another embodiment.

The system 10 and method 100 disclosed herein provides operation of the landing gear 20 without the need to manually raise and/or lower the landing gear 20, thereby minimizing or preventing injury, fatigue, or other issues with manual operation of the landing gear 20. Further, the system 10 and the method 100 provides a security system for the landing gear 20 to prevent unauthorized access to, theft of, and/or operation of the landing gear 20, the HVAC/R system 14, and/or the TRU 16. The system 10 and the method 100 further provides a communication link between an owner or other party to locally or remotely monitor, log, and/or track the location, operation, status, and/or condition of the landing gear system 10, the TRU 16, and/or the vehicle trailer 12.

While the invention has been illustrated and described in detail in the drawings and foregoing description, the same is to be considered as illustrative and not restrictive in character, it being understood that only certain embodiments have been shown and described and that all changes and modifications that come within the scope of the invention as defined by the appended claims are desired to be protected.

## Claims

1. A landing gear system (10) for a vehicle trailer (12) having an HVAC/R system (14), the landing gear system comprising:
a landing gear (20) configured to be raised and lowered to support the vehicle trailer;
a motor (22) coupled to the landing gear and configured to raise and lower the landing gear; and
a power source (24) operatively connected to the motor,
**characterised in that** the power source is configured for connection with the HVAC/R system (14).

2. The landing gear system of claim 1, wherein the motor (22) is an electric motor.

3. The landing gear system of claim 2, wherein the power source (24) is an electric battery electrically coupled to the electric motor (22).

4. The landing gear system of claim 1, further comprising a controller (26) configured to send power from the power source (24) to the motor (22).

5. The landing gear system of claim 4, wherein the controller (26) includes a security module (28) configured to limit control of at least one of the controller and the motor (22).

6. The landing gear system of claim 5, wherein at least two of the motor (22), the power source (24), and the controller (26) are connected by a circuit (30) such that disconnection of the circuit transmits an alert signal.

7. The landing gear system of claim 1, wherein the power source (24) is configured to receive power from the HVAC/R system (14) when a power level of the power source is below a threshold power level.

8. The landing gear system of claim 5, wherein the controller (26) is configured to detect disconnection between the motor (22) and the controller.

9. The landing gear system of claim 8, wherein a current is transmitted between the controller (26) and the motor (22) to detect disconnection between the controller and the motor.

10. The landing gear system of claim 8, wherein the controller (26) transmits an alert signal upon disconnection.

11. The landing gear system of claim 5, wherein a binary code is transmitted to the controller to limit access to at least one of the controller (26) and the motor (22).

12. A method of operating a landing gear system (10) of a vehicle trailer (12) having an HVAC/R system (14), the method comprising:
providing a motor (22) operatively coupled to a landing gear (20); and
powering the landing gear with a power source (24),
**characterised in that** the power source is configured for connection with the HVAC/R system (14).

13. The method of claim 12, further comprising controlling power from the power source (24) to the motor (22) with a controller (26).

14. The method of claim 13, further comprising:
connecting at least two of the motor (22), the power source (24), and the controller (26) with a circuit (30); and
signalling an alert upon disconnection of the circuit (30).

15. The method of claim 12, further comprising:
determining a power level of the power source (24); and
transmitting power from the HVAC/R system (14) to the power source when the power level is below a threshold power level.

## Patentansprüche

1. Fahrwerkssystem (10) für einen Fahrzeuganhänger (12), ein HVAC/R-System (14) aufweisend, wobei das Fahrwerkssystem umfasst:
ein Fahrwerk (20), dazu ausgelegt, angehoben und abgesenkt zu werden, um den Fahrzeuganhänger zu stützen;
einen Motor (22), gekoppelt mit dem Fahrwerk und dazu ausgelegt, das Fahrwerks anzuheben und abzusenken; und
eine Energiequelle (24), operativ verbunden mit dem Motor,
**dadurch gekennzeichnet, dass** die Energiequelle für eine Verbindung mit dem HVAC/R-System (14) ausgelegt ist.

2. Fahrwerkssystem nach Anspruch 1, wobei der Motor (22) ein Elektromotor ist.

3. Fahrwerkssystem nach Anspruch 2, wobei die Energiequelle (24) eine elektrische Batterie ist, elektrisch gekoppelt an den Elektromotor (22).

4. Fahrwerkssystem nach Anspruch 1, weiter umfassend eine Steuereinheit (26), dazu ausgelegt, Energie von der Energiequelle (24) an den Motor (22) zu senden.

5. Fahrwerkssystem nach Anspruch 4, wobei die Steuereinheit (26) ein Sicherheitsmodul (28) beinhaltet, dazu ausgelegt, Steuerung mindestens eines aus der Steuereinheit und dem Motor (22) zu begrenzen.

6. Fahrwerkssystem nach Anspruch 5, wobei mindestens zwei aus dem Motor (22), der Energiequelle (24) und der Steuereinheit (26) durch eine Schaltung (30) verbunden sind, sodass Trennung der Schaltung ein Warnsignal überträgt.

7. Fahrwerkssystem nach Anspruch 1, wobei die Energiequelle (24) dazu ausgelegt ist, Energie vom HVAC/R-System (14) zu empfangen, wenn ein Energieniveau der Energiequelle unter einem Energieschwellenniveau liegt.

8. Fahrwerkssystem nach Anspruch 5, wobei die Steuereinheit (26) dazu ausgelegt ist, Trennung zwischen dem Motor (22) und der Steuereinheit zu erkennen.

9. Fahrwerkssystem nach Anspruch 8, wobei ein Strom zwischen der Steuereinheit (26) und dem Motor (22) übertragen wird, um Trennung zwischen der Steuereinheit und dem Motor zu erkennen.

10. Fahrwerkssystem nach Anspruch 8, wobei die Steuereinheit (26) bei Trennung ein Warnsignal überträgt.

11. Fahrwerkssystem nach Anspruch 5, wobei ein binärer Code an die Steuereinheit übertragen wird, um den Zugriff auf mindestens eines aus der Steuereinheit (26) und dem Motor (22) zu begrenzen.

12. Verfahren zum Betreiben eines Fahrwerkssystems (10) eines Fahrzeuganhängers (12), ein HVAC/R-System (14) aufweisend, wobei das Verfahren umfasst:
Bereitstellen eines Motors (22), operativ gekoppelt an ein Fahrwerk (20); und
Speisen des Fahrwerks mit einer Energiequelle (24),
**dadurch gekennzeichnet, dass** die Energiequelle für eine Verbindung mit dem HVAC/R-System (14) ausgelegt ist.

13. Verfahren nach Anspruch 12, weiter umfassend Steuern von Energie von der Energiequelle (24) zu dem Motor (22) mit einer Steuereinheit (26).

14. Verfahren nach Anspruch 13, weiter umfassend:
Verbinden von mindestens zwei aus dem Motor (22), der Energiequelle (24) und der Steuereinheit (26) mit einer Schaltung (30); und
Signalisieren einer Warnung bei Trennung der Schaltung (30).

15. Verfahren nach Anspruch 12, weiter umfassend:
Bestimmen eines Energieniveaus der Energiequelle (24); und
Übertragen von Energie von dem HVAC/R-System (14) an die Energiequelle, wenn das Energieniveau unter einem Energieschwellenniveau ist.

## Revendications

1. Système de train d'atterrissage (10) pour une remorque de véhicule (12) présentant un système HVAC/R (14), le système de train d'atterrissage comprenant :
un train d'atterrissage (20) configure pour être levé et abaissé pour supporter la remorque de véhicule ;
un moteur (22) couplé au train d'atterrissage et configuré pour lever et abaisser le train d'atterrissage ; et
une source d'alimentation (24) raccordée en fonctionnement au moteur,
**caractérisé en ce que** la source d'alimentation est configurée pour le raccordement avec le système HVAC/R (14).

2. Système de train d'atterrissage selon la revendication 1, dans lequel le moteur (22) est un moteur électrique.

3. Système de train d'atterrissage selon la revendication 2, dans lequel la source d'alimentation (24) est une batterie électrique couplée électriquement au moteur électrique (22).

4. Système de train d'atterrissage selon la revendication 1, comprenant en outre un dispositif de commande (26) configuré pour envoyer de l'énergie de la source d'alimentation (24) au moteur (22).

5. Système de train d'atterrissage selon la revendication 4, dans lequel le dispositif de commande (26) inclut un module de sécurité (28) configuré pour limiter la commande d'au moins un du dispositif de commande et du moteur (22).

6. Système de train d'atterrissage selon la revendication 5, dans lequel au moins deux du moteur (22), de la source d'alimentation (24), et du dispositif de commande (26) sont raccordés par un circuit (30) de sorte que la déconnexion du circuit transmette un signal d'alerte.

7. Système de train d'atterrissage selon la revendication 1, dans lequel la source d'alimentation (24) est configurée pour recevoir de l'énergie du système HVAC/R (14) lorsqu'un niveau d'alimentation de la source d'alimentation est inférieur à un niveau d'alimentation seuil.

8. Système de train d'atterrissage selon la revendication 5, dans lequel le dispositif de commande (26) est configuré pour détecter la déconnexion entre le moteur (22) et le dispositif de commande.

9. Système de train d'atterrissage selon la revendication 8, dans lequel un courant est transmis entre le dispositif de commande (26) et le moteur (22) pour détecter la déconnexion entre le dispositif de commande et le moteur.

10. Système de train d'atterrissage selon la revendication 8, dans lequel le dispositif de commande (26) transmet un signal d'alerte suite à la déconnexion.

11. Système de train d'atterrissage selon la revendication 5, dans lequel un code binaire est transmis au dispositif de commande pour limiter l'accès à au moins un du dispositif de commande (26) et du moteur (22).

12. Procédé de fonctionnement d'un système de train d'atterrissage (10) d'une remorque de véhicule (12) présentant un système HVAC/R (14), le procédé comprenant :
la fourniture d'un moteur (22) couplé en fonctionnement à un train d'atterrissage (20) ; et
l'alimentation du train d'atterrissage avec une source d'alimentation (24),
**caractérisé en ce que** la source d'alimentation est configurée pour le raccordement avec le système HVAC/R (14).

13. Procédé selon la revendication 12, comprenant en outre la commande d'énergie de la source d'alimentation (24) au moteur (22) avec un dispositif de commande (26).

14. Procédé selon la revendication 13, comprenant en outre :
le raccordement au moins de deux du moteur (22), de la source d'alimentation (24), et du dispositif de commande (26) avec un circuit (30) ; et
le signalement d'une alerte suite à la déconnexion du circuit (30).

15. Procédé selon la revendication 12, comprenant en outre :
la détermination d'un niveau d'alimentation de la source d'alimentation (24) ; et
la transmission d'énergie du système HVAC/R (14) à la source d'alimentation lorsque le niveau d'alimentation est inférieur à un niveau d'alimentation seuil.
